# EUROPEAN PATENT SPECIFICATION

(11) **EP 4 102 422 B1**
(45) Date of publication and mention of the grant of the patent: **22.05.2024**
(21) Application number: 22173961.8
(22) Date of filing: 18.05.2022
(51) Int. Cl.: G06Q 10/04, G06Q 10/08, G06Q 50/08

(54) **POSITION DETERMINATION IN AN ELECTRONIC DEVICE DURING TRANSPORTATION**
POSITIONSBESTIMMUNG IN EINER ELEKTRONISCHEN VORRICHTUNG WÄHREND DES TRANSPORTS
DÉTERMINATION DE POSITION DANS UN DISPOSITIF ÉLECTRONIQUE PENDANT LE TRANSPORT

(30) Priority: 07.06.2021 SE 2150718
(43) Date of publication of application: 14.12.2022
(73) Proprietor: Sony Network Communications Europe B.V., 2132LS Hoofddorp (NL)
(72) Inventor: TILLGREN, Magnus, Basingstoke, RG22 4SB (GB); FALK, Mattias, Basingstoke, RG22 4SB (GB); EKSTRÖM, Jörgen, Basingstoke, RG22 4SB (GB); KVAPIL, Jan, Basingstoke, RG22 4SB (GB)
(74) Representative: Neij & Lindberg AB

(56) References cited:
- US-A1- 2018 158 019
- US-A1- 2021 255 334

## Description

### Technical Field

The present disclosure relates to functions in electronic devices and, in particular, techniques for operating an electronic device during transportation.

### Background

Electronic devices are used for tracking assets, vehicles, persons and animals during transportation. Such electronic devices are commonly known as tracker devices ("trackers") or geotracking devices. For example, a tracker may be attached to otherwise associated with an item to be transported. During transportation, the tracker is operated to repeatedly determine its position by use of a GNSS receiver, for example a GPS receiver, and wirelessly transmit its position to a backend device, for example in the cloud. Conventionally, the tracker performs position determination and data transmission at a fixed rate. The power consumption of the tracker is largely determined by the processes of position determination and data transmission.

This type of electronic device is powered by an on-board power source and is thus power-limited. For example, the tracker may be a so-called IoT (Internet-of-Things) device. To limit power consumption, position determination and data transmission may be performed intermittently at long time intervals, with the time interval being set to meet the requirements of the tracking application at the backend. However, a long time interval may have drawbacks that offset the power savings. For example, it may be desirable to use the determined positions to detect arrival at the destination and activate a power-saving function in the tracker upon arrival. A long time interval may lead to a late detection of arrival. A belated arrival detection will postpone activation of the power-saving function and result in unnecessary power consumption. Further, there is a risk that the tracker enters a building at the destination before arrival is detected. If the building impedes the position determination of the GNSS receiver, for example by blocking GNSS signals, there is a risk that neither the tracker nor the backend detects the arrival. Further, if the transportation is delayed, the tracker may run out of power and tracking will fail.

There is thus a difficult trade-off between operability and power saving when configuring a tracker device to determine and transmit position data.

US 2018/158019 A1 refers to trucks, tractor-trailers, or tractors that are connected to chassis for carrying containers can be used to transport cargo that includes goods. Cargo can be transported from an origin (such as a factory, a warehouse, a retail outlet, etc.) to a destination (such as retail outlet, a warehouse, customer premises, etc.) along a route. US 2021/255334 A1 refers to managing operations of a wireless tracking device with a restricted power source, more specifically to operating the wireless tracking device in more than one mode of operation to reduce power consumption and prolong its operational time.

### Summary

It is an objective to at least partly overcome one or more limitations of the prior art.

It is also an objective to provide a technique to enable low power consumption of an electronic device that determines and transmits positions while in transit to a destination.

A further objective is to enable safe determination of arrival at the destination of such an electronic device.

One or more of these objectives, as well as further objectives that may appear from the description below, are at least partly achieved by an electronic device, a method performed by an electronic device, and a computer-readable medium according to the independent claim, embodiments thereof being defined by the dependent claims.

A first aspect of the present disclosure is an electronic device. The electronic device comprises a positioning system comprising a GNSS receiver, and a wireless communication system. The electronic device is configured to, during transportation of the electronic device to a destination, operate the positioning system to determine positions of the electronic device and operate the wireless communication system to transmit position data comprising one or more of the positions to a remote computer. The electronic device is further configured to obtain, based on a first position determined by the positioning system at a first time point, an estimated remaining transportation time to the destination, and determine, based on the estimated remaining transportation time, a second time point for operating the positioning system to determine a second position. The electronic device further comprises a movement sensing system configured to generate sensor data representing movement of the electronic device. The electronic device is further configured to obtain the sensor data from the movement sensing system after the first time point, process the sensor data to determine one or more movement parameters of the electronic device, evaluate the one or more movement parameters for determination of a transportation delay, determine a third time point as a combination of the transportation delay and the second time point, and operate the positioning system to determine the second position at the third time point.

A second aspect is a method performed by an electronic device comprising a positioning system comprising a GNSS receiver, a wireless communication system, and a movement sensing system configured to generate sensor data representing movement of the electronic device. The method comprises, during transportation of the electronic device to a destination, operating the positioning system to determine positions of the electronic device, and operating the wireless communication system to transmit position data comprising one or more of the positions to a remote computer. The method further comprises obtaining, based on a first position determined by the positioning system at a first time point, an estimated remaining transportation time to the destination; determining, based on the estimated remaining transportation time, a second time point for operating the positioning system to determine a second position; obtaining the sensor data from the movement sensing system after the first time point; processing the sensor data to determine one or more movement parameters of the electronic device; evaluating the one or more movement parameters for determination of a transportation delay; determining a third time point as a combination of the transportation delay and the second time point; and operating the positioning system to determine the second position at the third time point.

A third aspect is a computer-readable medium comprising instructions which, when installed on a processing system, causes the processing system to perform the method of the second aspect.

Still other objectives and aspects, as well as features, embodiments and technical effects will appear from the following detailed description, the attached claims and the drawings.

### Brief Description of Drawings

FIG. 1 illustrates a transportation route followed by a tracker device during road transport from a departure point to a destination point.
FIG. 2 is a flow chart of an example method performed in the tracker device.
FIG. 3A is a block diagram of an example tracker device, and FIG. 3B shows a tracker device in communication with a remote computer.
FIG. 4 is a timing diagram of events generated by the method in FIG. 2 in accordance with conventional practice.
FIG. 5A is a flowchart of an example method for position determination in accordance with embodiments, and FIGS 5B-5F are flow charts of example procedures performed by the method in FIG. 5A in accordance with embodiments.
FIGS 6A-6C are timing diagrams of events generated by the method in FIGS 5A-5F in accordance with examples.

### Detailed Description of Example Embodiments

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements. Like numbers refer to like elements throughout.

Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments.

It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure. As used herein, the terms "multiple", "plural" and "plurality" are intended to imply provision of two or more elements, whereas the term "set" is intended to imply a provision of one or more elements. The term "and/or" includes any and all combinations of one or more of the associated listed elements.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Embodiments relate to techniques of operating an electronic device in transit to a destination. Some embodiments relate to operation of the electronic device for detecting arrival at the destination based on positions determined by the electronic device during transport. The transport may be made for any purpose and by any means of transportation, including transport by road, water or air, or any combination thereof. The electronic device may be any device that comprises a GNSS receiver for position determination, including but not limited to a tracker device, a mobile phone, a smart phone, a personal digital assistant (PDA), a tablet computer, a laptop computer, an IoT (Internet-of-Things) device, a wearable computer, etc.

Embodiments will be described with reference to a tracker device ("tracker"), which is attached to or otherwise associated with an item to be transported. The tracker is configured to intermittently determine its geographic position during transport and wirelessly transmit corresponding position data to a remote computer, for example a server or cloud computing system. The geographic position is determined in a global coordinate system (GCS) to allow the remote computer to keep track of the location of the item.

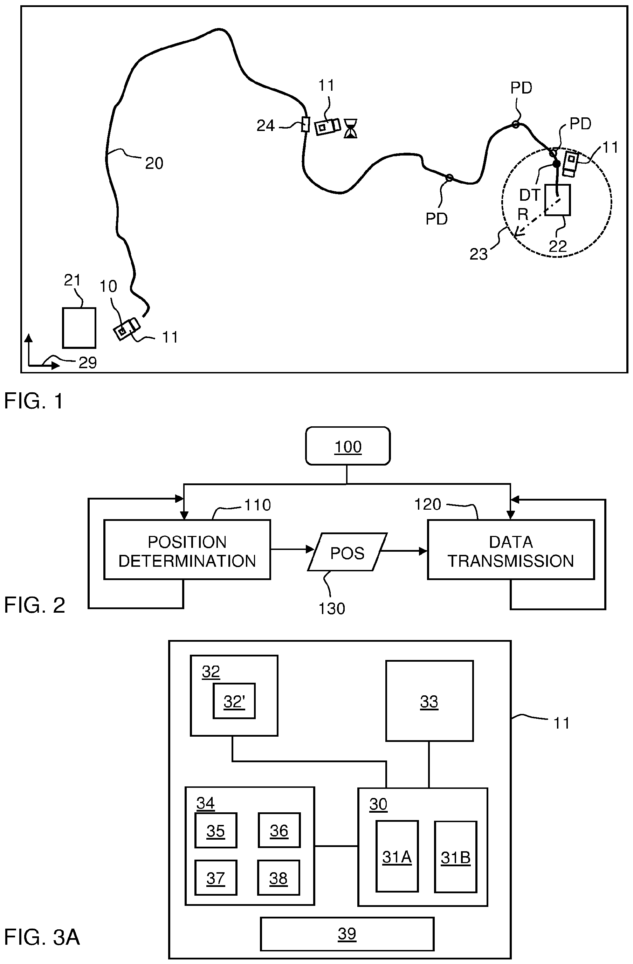

FIG. 1 is a top view of an example transportation route 20 for a tracker 11 from a departure point to a destination, which may be a final or intermediate destination. In the illustrated example, goods and a tracker 11 are loaded onto a road vehicle 10 at the departure point, represented by a building 21, for example a store, warehouse, logistics facility, etc. The road vehicle 10 may be a car, van, lorry, truck, etc. The vehicle 10 transports the tracker 11 on the route 20 to the destination, which is represented by a building 22, for example a store, warehouse, logistics facility, etc. During transport, the tracker 11 intermittently determines its position in the GCS 29, by use of a GNSS receiver, and intermittently transmits corresponding position data to a remote computer. In FIG. 1, some instances of position determination along the route 20 are indicated by open dots PD, and an instance of position data transmission is indicated by PT, which in this particular example occurs when the tracker 11 has arrived at the destination.

FIG. 2 is a flow chart of an example method 100 that is performed by the tracker 11 during transport. The method 100 comprises two procedures 110, 120 which may be performed independently of each other or in synchronization. Procedure 110 is performed repeatedly and at a fixed or variable time interval to determine the current position of the tracker 11 in the GCS 29. Procedure 120 is performed repeatedly and at a fixed or variable time interval to wirelessly transmit position data and/or other data to the remote computer. As shown, the positions 130 that are determined by procedure 110 are obtained by the procedure 120. Depending on the timing between the procedures 110, 120, one or more positions may be included in the position data that is transmitted by procedure 120.

Proper detection of arrival by the tracker 11 may be critical in the scenario in FIG. 1. The tracker 11 may detect arrival by evaluating its position in relation to one or more geofences, which are stored in the tracker 11 to represent different destinations. In FIG. 1, a geofence 23 is indicated by dashed lines and is defined by a radius R from a reference point given by coordinates in the GCS 29. Other geofence definitions are conceivable. If the determined position is within the geofence 23, arrival is detected. It should be noted that the tracker 11 need not be aware of its destination but may store geofences for a plurality of possible destinations. Whenever a determined position falls within one of the geofences, the tracker 11 may detect arrival. Alternatively, arrival may be detected by the remote computer based on position data received from the tracker 11. The remote computer may or may not be aware of the destination of the route 20 and may or may not use geofences for detecting arrival.

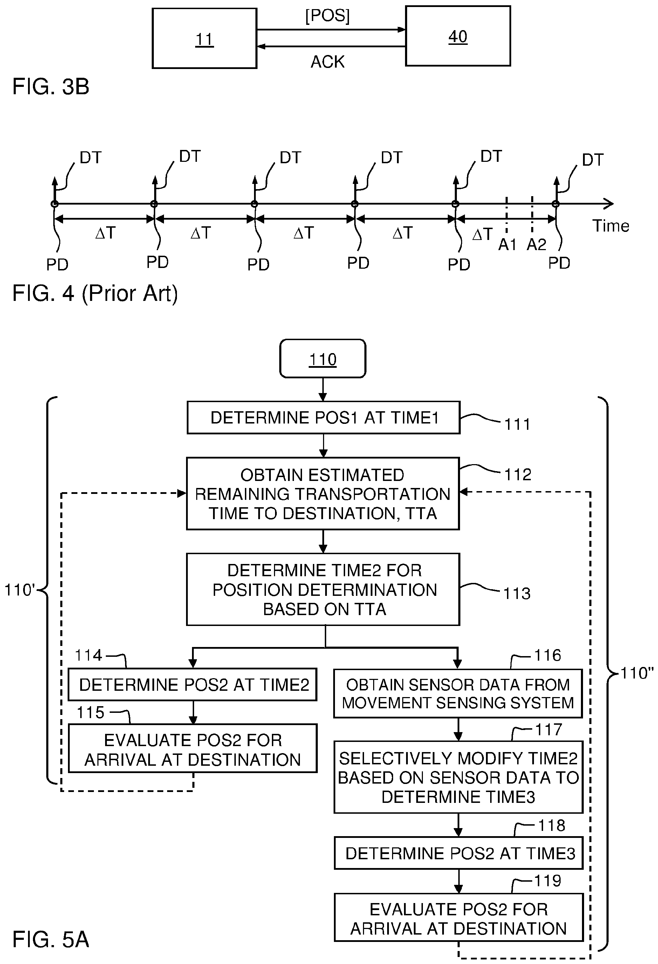

FIG. 4 is a timing diagram of actions performed by the method 100 in FIG. 2 in accordance with conventional practice. In FIG. 4, individual executions of the position determination 110 are represented by open circles and designated PD, and individual executions of the data transmission 120 are represented by vertical arrows and designated DT. The tracker 11 performs the procedures 110, 120 in synchronization at a time interval ΔT. Thus, at interval ΔT, the tracker 11 determines a current position and transmits the current position to the remote computer.

As mentioned in the Background section, there is a trade-off between operability and power consumption when configuring a tracker to determine and transmit position data. In the example of FIG. 1, it is conceivable that the tracker 11 will be quickly transported into the building 22 upon arrival at the destination. Buildings are known to attenuate or even block positioning signals from GNSS systems. This situation is illustrated in FIG. 4, where the tracker 11 enters the geofence 23 at time point A1 and the building 22 at time point A2. If the building 22 prevents GNSS positioning, neither the tracker 11 nor the remote computer will detect that the tracker 11 has arrived at its destination. This situation may be overcome by using a short time interval ΔT, albeit at the cost of a significantly increased power consumption. For example, the time interval may be set to 1-10 minutes.

Another difficulty in this context arises when the transport is delayed for some reason. This is exemplified in FIG. 1, where the vehicle 10 makes an unscheduled stop at location 24. Such a stop may be occasioned by a need to re-fuel the vehicle 10, the driver taking a break, a need maintenance of the vehicle 10, a new delivery and/or pickup along the route 20, etc. The transport may be delayed for other reasons, for example delays at intermediate stops for delivery and/or pickup on the route, additions of new intermediate stops to the original delivery schedule, traffic congestion, detours, human error, etc. The delay may cause the tracker 11 to run out of power before arriving at the destination. This risk is prominent when the tracker 11 is configured to perform position determination at short intervals.

The following disclosure presents techniques of operating an electronic device, for example a tracker, to overcome one or more of these shortcomings or difficulties. The techniques described herein enable power savings in the electronic device during transport by estimating a time to arrival at the destination and by configuring the position determination procedure in the electronic device based on the estimated time to arrival. The techniques described herein also enable a more precise and safe detection of arrival at the destination.

FIG. 3A is a schematic block diagram of an electronic device 11 that may be configured in accordance with embodiments to be described further below. In the following, for convenience only, the electronic device 11 is referred to as a tracker. The tracker 11 is a unitary device that comprises a control unit 30, which defines logic configured to control the operation of the tracker 11. The control unit 30 comprises a processor 31A and computer memory 31B. In some embodiments, a control program is stored in the memory 31B and executed by the processor 31A to operate the control unit 30. The control program may be supplied to the tracker 11 on a computer-readable medium, which may be a tangible (non-transitory) product (for example, magnetic medium, optical disk, read-only memory, flash memory, etc.) or a propagating signal. The processor 31A may, for example, include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array").

The tracker 11 further comprises a positioning system 32, a communication system 33 and a measurement system 34, which are connected for data communication with the control unit 30. A power source 39 is included to power the components of the tracker 11. The power source 39 may include one or more batteries, fuel cells, etc.

The positioning system 32 is configured to determine the geographic position of the tracker 11 in the GCS 29 (FIG. 1) based on one or more incoming wireless positioning signals received by a receiver 32'. The positioning system 32 may be configured to operate with any available GNSS (Global Navigation Satellite System), including but not limited to GPS, GLONASS, Galileo, Beidou, etc. Thus, receiver 32' may be a GNSS receiver 32' for receiving wireless signals from a satellite system, and the positioning system 32 may be configured to perform autonomous geo-spatial positioning in the GCS 29 based on the wireless signals.

The communication system 33 is configured for wireless communication, for example cellular communication in the licensed and/or unlicensed frequency spectrum. The communication system 33 may be configured to implement one or more commercially available radio access technologies, such as circuit-switched network technologies, including but not limited to global system for mobile communications (GSM), code division multiple access (CDMA), wideband CDMA (WCDMA), and advanced or alternative versions of these standards, or packet-switched network technologies, including but not limited to general packet radio service (GPRS), universal mobile telecommunications system (UMTS), 3G, 4G, 4G long-term evolution (LTE), and 5G NR, and advanced or alternative versions of these standards. Alternatively or additionally, the communication system 33 may be configured to implement radio access technologies in the unlicensed frequency spectrum, such as MulteFire, LoRa, Sigfox, etc.

The measurement system 34 is a self-contained system which is configured to sense movements of the tracker 11 and may be referred to as a "movement sensing system". The term "self-contained" implies that the system 34 senses movement independently of external signals. The system 34 may thus generate sensor data that represents physical parameters of the tracker 11 itself, such as acceleration, speed, displacement, altitude, pressure, vibration, orientation, etc. In the illustrated embodiment, the measurement system 34 comprises a plurality of sensors, including an accelerometer 35, a gyroscope 36, a magnetometer 37, and an altimeter 38. The accelerometer 35 is configured to measure acceleration along one or more axes. The gyroscope 36 is configured to measure orientation and/or angular speed. The magnetometer 37 is configured to measure the strength and direction of the magnetic field. The altimeter 37 is configured to generate data indicative of altitude. In some embodiments, the measurement system 34 comprises at least the accelerometer 35. It should be understood that the sensors 35-38 may be separate units or integrated into one or more modules. For example, the measurement system 34 may include an inertial measurement unit (IMU) that contains the accelerometer 35, the gyroscope 36 and, optionally, the magnetometer 38.

FIG. 3B is a functional block diagram of a system comprising the tracker 11 and a remote computer 40. The tracker 11 is configured to wirelessly transmit position data, [POS], to the remote computer 40, which may be configured to respond by wirelessly transmitting an acknowledgement signal, ACK. In some embodiments, described further below, the remote computer 40 may transmit further data in response to the position data, to be used by the tracker 11 to detect arrival. In some embodiments, the tracker 11 may be configured to transmit other information to the remote computer 40, in addition to or instead of the position data. Such additional information may, for example, be indicative of transport-related events detected by the tracker 11, such as arrival at the destination.

FIG. 5A is a flow chart of an example method that may be performed by a tracker 11 as part of the position determination procedure 110. The method 110 in FIG. 5A represents into two alternative processes: a first process 110' comprising steps 111-115, and a second process 110" comprising steps 111-113 and 116-119. The tracker 11 may be configured to perform only one of the first or second processes. It is also conceivable that the tracker 11 is operable to selectively perform either of the first and second processes. In one example, tracker 11 may select between the first and second processes based on an external configuration signal, for example from the remote computer 40 or from a switch on the tracker. In another example, the tracker 11 may autonomously switch between the first and second processes during transport.

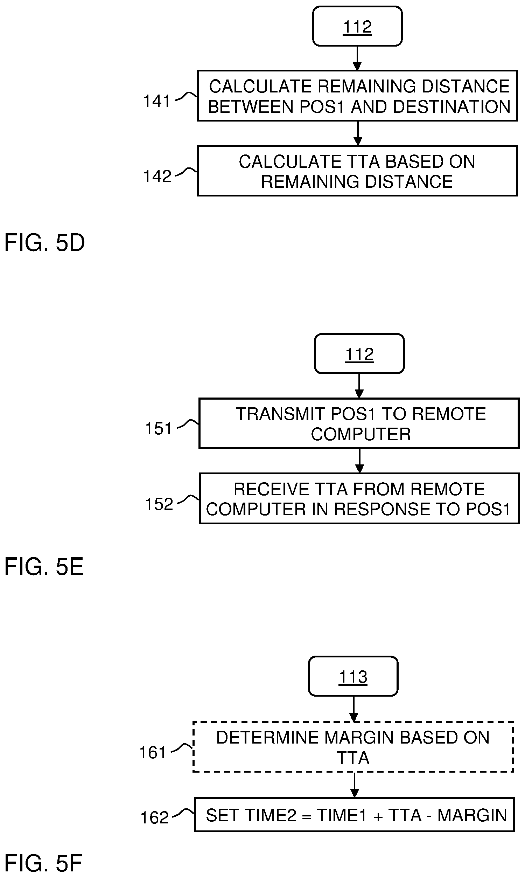

In step 111, which is performed at a first time point, TIME1, the tracker 11 operates its positioning system 32 to determine a current position in the GCS 29. In the following, the current position at TIME 1 is denoted first position, POS 1. Step 111 may be performed at any time before or during transportation. For example, with reference to FIG. 1, step 111 may be performed when the tracker 11 leaves the departure point. In step 112, which is performed in conjunction with step 111, the tracker 11 obtains an estimated remaining transportation time to the destination, denoted TTA (time-to-arrival) in the following. The TTA may be obtained by the tracker 11 calculating the TTA by use of data stored in the tracker 11 and/or by the tracker 11 receiving the TTA from the remote computer 40. Examples of step 112 will be described in more detail below with reference to FIGS 5D-5E. In step 113, the tracker 11 uses the TTA to determine a second time point, TIME2, for operating the positioning system 32 to determine a current position, denoted POS2 in the following. Thus, by step 113, the tracker 11 determines a future time point that is deemed suitable for determining POS2 in view of TTA. In some embodiments , TIME2 is set to ensure that the tracker 11 does not arrive at the destination before TIME2. In some embodiments, the tracker 11 determines TIME2 as a combination of TIME1 and TTA. Steps 111-113 allow the tracker 11 to suspend the position determination from TIME1 to TIME2, or even longer, resulting in significant power savings. Alternatively, the tracker 11 may repeatedly perform position determination at any desirable time interval from TIME1 to TIME2. This time interval may be set to be relatively long to save power since the tracker 11 is unlikely to arrive at the destination before TIME2. Optionally, the tracker 11 may also perform the data transmission procedure 120 (FIG. 2) to transmit position data between TIME1 and TIME2, for example in accordance with the schedule in FIG. 4.

FIG. 5D is a flow chart of an example procedure performed by the tracker 11 to obtain the TTA in step 112. The procedure in FIG. 5D presumes that the tracker 11 stores at least the location of the destination in the GCS 29. In step 141, the tracker 11 calculates the remaining distance from POS 1 to the destination. In one embodiment, the remaining distance is estimated by a straight line between POS 1 and the destination, which may be calculated as the length of a vector between POS 1 and the destination in the GCS 29. In another embodiment, the tracker 11 stores map data and calculates the remaining distance by evaluating POS 1 in relation to the map data. The map data comprises a geographic representation of one or more available transportation paths from POS1 to the destination in the GCS 29. In one example, the tracker 11 calculates the driving distance from POS1 to the destination. If the scheduled route is known to the tracker 11, the driving distance may be calculated along the scheduled route. If the scheduled route is not known, the tracker 11 may determine a candidate route from POS 1 to the destination and calculate the driving distance along the candidate route. In step 142, the tracker 11 calculates the TTA based on the remaining distance given by step 141. For example, the tracker 11 may use a predefined speed to estimate the TTA. In another example, steps 141-142 are combined and the tracker 11 calculates the TTA based on the (candidate) route and while applying speed data indicative of speed limits along the route.

FIG. 5E is a flow chart of another example procedure performed by the tracker 11 to obtain the TTA in step 112. In step 151, the tracker 11 transmits POS1 to the remote computer 40. In step 152, the tracker 11 receives TTA from the remote computer 40 in response to POS1, for example together with the acknowledgement signal ACK in FIG. 3B. The remote computer 40 may calculate the TTA in any conceivable way, for example in accordance with the procedure in FIG. 5D. It is realized that the remote computer 40, which may be included in a tracking system connected to a large number of trackers, may have easy access to the transportation route of the tracker 11, the current traffic situation, speed limits, historic or concurrent transportation speeds of other trackers, etc. Thus, the remote computer 40 may be capable of calculating a relatively accurate TTA, given the available data at TIME1.

FIG. 5F is a flow chart of an example procedure performed by the tracker 11 to determine TIME2 in step 113, in which TIME2 is calculated as a function of TIME1 and TTA and by use of a safety margin. The safety margin is set to minimize the risk that the tracker 11 arrives at the destination before TIME2. In step 162, the tracker 11 calculates TIME2 by subtracting the safety margin from the combination of TIME 1 and TTA. As shown, the combination of TIME 1 and TTA may be a summation. In some embodiments, the safety margin is predefined in time units, for example 10-60 minutes. In other embodiments, as indicated by optional step 161, the tracker 11 determines the safety margin based on the TTA. In one example, the safety margin is given as a predefined fraction of the TTA. For example, the fraction may be in the range of 0.1-0.5, or 0.2-0.4. In another example, the tracker 11 associates ranges of TTAs with different safety margins and sets the safety margin accordingly.

Returning to FIG. 5A, the first process 110' comprises the additional steps 114 and 115. In step 114, which is performed at TIME2 given by step 113, the tracker 11 operates its positioning system 32 to determine a current position, which thus is POS2. In step 115, the tracker 11 evaluates POS2 for detection of arrival at the destination, for example by comparing POS2 to one or more geofences. If arrival is detected in step 115, the tracker 11 may perform a dedicated action, for example transmit POS2 to the remote computer 40, optionally together with previously determined positions. If arrival is not detected in step 115, the tracker 11 may return to step 112 with POS1 being set to POS2, as indicated by a dashed arrow.

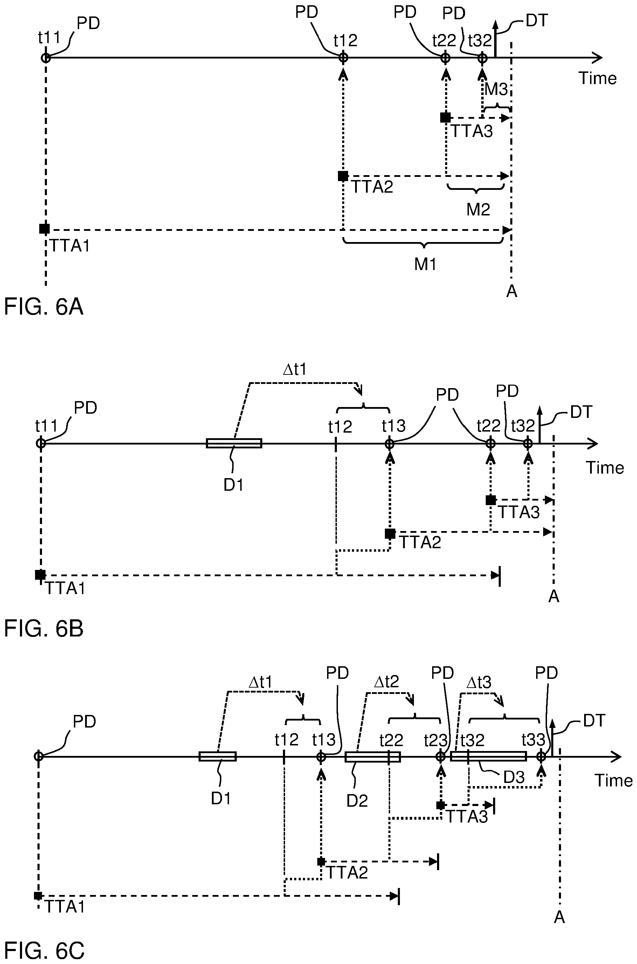

An example of tracker events during the first process 110' is shown in the timing diagram of FIG. 6A. Here, PD designates position determination, DT designates data transmission, and A designates the arrival of the tracker 11 at the destination. In FIG. 6A, the tracker 11 performs steps 111-113 at time t11, resulting in an estimated time-to-arrival TTA1. By applying safety margin M1 to TTA1, step 113 sets TIME2 to t12. The tracker 11 then waits until t12. At this time, the tracker 11 determines POS2 and evaluates POS2 to detect arrival. Since arrival is not detected, the tracker 11 performs steps 112-113 at t12, resulting in the estimated time-to-arrival TTA2 in relation to t12. By applying safety margin M2 to TTA2, step 113 sets TIME2 to t22. The tracker 11 then waits until t22. At this time, the tracker 11 determines POS2 and evaluates POS2 to detect arrival. Since arrival is not detected, the tracker 11 again performs steps 112-113 at t22, resulting in the estimated time-to-arrival TTA3 in relation to t22. By applying safety margin M3 to TTA3, step 113 sets TIME2 to t32. The tracker 11 then waits until t32. At this time, the tracker 11 determines POS2 and detects that POS2 is located within a geofence. The detection of arrival triggers the tracker 11 to transmit position data after t32. The timing of events in FIG. 6A may be matched to the events PD, DT shown in FIG. 1. Thus, the tracker 11 is operated to perform position determination PD at a few time points towards the end of the route 20 to enable safe detection of arrival and performs a data transmission when arrival has been detected. Arrival is detected by the tracker 11 as it is approaching the destination. The tracker 11 is thereby capable of informing the remote computer 40 about the arrival before the tracker 11 is brought into the building 22. The tracker 11 may enter a low power state upon detection of arrival.

In the first process 110', the tracker 11 is operated to determine POS2 at TIME2 (step 114), which is determined at TIME1 based on TTA (step 113). Thus, TIME2 is a predicted time point that is determined based on information that is available to the tracker 11 and/or the remote computer 40 at TIME1. The first process 110' is thereby unable to account for unexpected events that may occur after TIME1. In the example of FIG. 1, if TIME2 is determined when the tracker 11 leaves the building 21 on route 20 and the vehicle 10 makes an unexpected stop at location 24, the tracker 11 may perform step 114 to determine POS2 well before the first PD as indicated in FIG. 1, for example during the stop. It is realized that the number of position determinations PD during the route 20 is likely to increase with increasing transportation delay. There is also a risk that delays will introduce uncertainties in the TTAs that are determined and used in subsequent repetitions of steps 112-115. Such uncertainties may disrupt the timing of the position determination PD and, in a worst case scenario, cause the arrival detection by the tracker 11 to fail.

These risks and drawbacks are mitigated in the second process 110" in FIG. 5A. When TIME2 has been determined in step 113, the second process 110' proceeds to step 116. In step 116, the tracker 11 obtains sensor data from its measurement system 34. The sensor data represents the movement of the tracker 11. Step 116 may be performed repeatedly from TIME1 and onwards. In step 117, the tracker selectively modifies TIME2 based on the sensor data from step 116 to determine a third time point, TIME3. Step 117 may be performed continuously based on the sensor data from step 116. In step 118, the tracker 11 operates its positioning system 32 at TIME3 to determine POS2. In step 119, the tracker 11 evaluates POS2 for detection of arrival at the destination, for example by comparing POS2 to one or more geofences. If arrival is detected in step 119, the tracker 11 may perform a dedicated action, for example transmit POS2 to the remote computer 40, optionally together with previously determined positions. If arrival is not detected in step 119, the tracker 11 may return to step 112 with POS1 being set to POS2, as indicated by a dashed arrow.

In contrast to the first process 110', the second process 110" determines POS2 at TIME3, which is set in relation to TIME2 based on the movement of the tracker 11. Thus, based on the sensor data from step 116, the second process 110" is capable of detecting and estimating any delay that may occur during the transportation route. By step 117, the second process 110' is capable of compensating TIME2, as determined by step 113, by the estimated delay. It is realized that the second process 110" may be implemented to automatically ensure that POS2 is determined at an appropriate and intended time point in relation to the arrival of the tracker 11 at the destination.

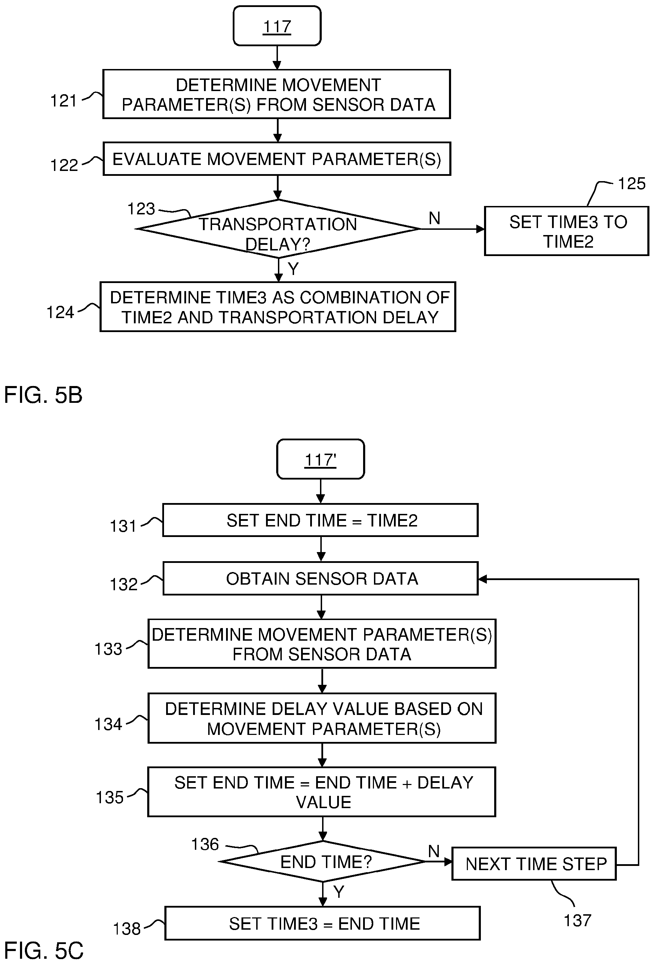

FIG. 5B is a flow chart of an example procedure performed by the tracker 11 to determine TIME3 in step 117. In step 121, the tracker 11 processes the sensor data (obtained by step 116) to determinate one or more movement parameters of the tracker 11. In step 122, the tracker 11 evaluates the movement parameter(s) for determination of a transportation delay. If a transportation delay is determined in step 122, step 123 proceeds to step 124. In step 124, the tracker 11 determines TIME3 as a combination of TIME2 and the transportation delay. In some embodiments, the combination is a summation, optionally weighted. By step 124, the time point of the next position determination may be postponed in proportion to the transportation delay, to ensure that POS2 is determined at an appropriate time point. It no transportation delay is determined in step 122, step 123 proceeds to step 125. In step 125, the tracker 11 sets TIME3 to TIME2. It is seen that the tracker 11 determines TIME3 by selectively adjusting TIME2 based on the sensor data from its measurement system 34.

In some embodiments, step 121 comprises determining a movement parameter that represents the speed of the electronic device. Such a movement parameter may be determined from or be included in the sensor data from the accelerometer 35, in a manner known to the skilled person. A transportation delay may be detected in step 122 by comparing the measured speed during transportation to one or more reference speeds. In step 122, if a speed deviation is detected, a speed-related delay value may be calculated based on the speed deviation and included in the transportation delay. In one example, a transportation delay is detected if the measured speed is within a predefined slow speed range for a time period. For example, a slow speed caused by traffic congestion may be implied if the time period exceeds a minimum time, for example 1-10 minutes. The speed-related delay value may be calculated based on the speed deviation and the duration of the speed deviation.

In some embodiments, step 121 comprises determining a movement parameter that represents a time period of standstill of the tracker 11. Such a movement parameter may be determined based on acceleration, speed or displacement of the tracker 11 measured by the accelerometer 35. A transportation delay may be detected in step 122 by comparing the time period of standstill to a threshold period, which may be set to distinguish standstills during regular traffic from standstills when the vehicle 10 is parked. A delay value, to be included in the transportation delay, may be set equal to the time period of standstill.

In some embodiments, step 121 comprises determining a movement parameter that represents the movement direction of the tracker 11. Such a movement parameter may be determined based on sensor data from the accelerometer 35, the gyrometer 36 and the magnetometer 37, and optionally the altimeter 38, in manner known to the skilled person. A transportation delay may be detected in step 122 by comparing the movement direction to a reference direction of the tracker 11. The reference direction may be an expected movement direction of the tracker 11. In some embodiments, the expected direction may be given by the scheduled route of the tracker 11, if stored in the tracker 11, or by the above-mentioned candidate route, if determined by the tracker 11. In some embodiments, the expected direction may be an average direction of the route from POS1 to the destination. The tracker 11 may receive the average direction from the remote computer 40 in response to transmitting POS 1 to the remote computer 40 after step 11 at TIME1. In step 122, a direction deviation may be detected if the movement direction deviates significantly from the reference direction for a sufficient time period. If a direction deviation is detected, a direction-related delay value may be calculated based on the direction deviation and the duration of the direction deviation.

In some embodiments, if the tracker 11 determines POS1 while the tracker 11 is in standstill, as indicated by the sensor data, step 121 comprises determining a movement parameter that represents the movement path of the tracker 11 as the tracker 11 starts to move again after the standstill. The movement path may be determined based on sensor data from the accelerometer 35 and the gyrometer 36, and optionally the magnetometer 37 and/or the altimeter 38, in a manner known to the skilled person. A transportation delay may be detected in step 122 by comparing the movement path to the scheduled route of the tracker 11, if stored in the tracker 11, or by the above-mentioned candidate route, if determined by the tracker 11. If a deviation is detected, a path-related delay value may be calculated based on the movement path.

An example of tracker events during the second process 110" is shown in the timing diagram of FIG. 6B. Compared to the timing diagram in FIG. 6A, a delay D1 is introduced between t11 and t12, for example corresponding to the stop at location 24 in FIG. 1. In FIG. 6B, the tracker 11 performs steps 111-113 at time t11, resulting in TTA1. Like in FIG. 6A, by applying a safety margin to TTA1, step 113 sets TIME2 to t12. Steps 116-117 measure the delay D1 to Δt1 and adds Δt1 to TIME2 to set TIME3 at t13, as indicated by a dashed arrow. At t13, the tracker 11 determines POS2 and evaluates POS2 to detect arrival. Since arrival is not detected, the tracker 11 again performs steps 112-113 at t13, resulting TTA2 in relation to t13. By applying a safety margin to TTA2, step 113 sets TIME2 to t22. Since no delay is detected by steps 116-117, TIME3 is set to t22. At t22, the tracker 11 determines POS2 and evaluates POS2 to detect arrival. Since arrival is not detected, the tracker 11 again performs steps 112-113 at t22, resulting in TTA3 in relation to t22. By applying a safety margin to TTA3, step 113 sets TIME2 to t32. The tracker 11 then waits until t32. At this time, the tracker 11 determines POS2 and determines that POS2 is located within a geofence. The detection of arrival triggers the tracker 11 to transmit position data after t32. The timing of events in FIG. 6B may be matched to the events PD, DT shown in FIG. 1. It is realized that even in the presence of an unscheduled and arbitrary delay along the route 20, for example at location 24, the tracker 11 is operated to perform position determination PD at a few time points towards the end of the route 20 to enable safe detection of arrival and performs a data transmission when arrival has been detected. The tracker 11 is thereby capable of informing the remote computer 40 about the arrival before the tracker 11 is brought into the building 22. The tracker 11 may enter a low power state upon detection of arrival.

FIG. 5C is a flow chart of an example procedure 117' performed by the tracker 11 to determine TIME3. The procedure 177' corresponds to a combination of steps 116 and 117 in FIG. 5A and comprises an iterative calculation of the transportation delay. The iterative calculation is implemented to properly account for delays that occur at TIME2, as determined by step 113. To further illustrate the procedure 117', reference is made to FIG. 6C, which is a timing diagram that is similar to FIG. 6B but includes two additional delays D2, D3. As seen, the delay D2 extends past t22, which is TIME2 determined by step 113 at time t13. A proper determination of TIME3 in step 117 should account for the entire delay D2, by adding Δt2 to t22, as indicated by a dashed arrow. TIME3 is thereby set at t23. Further, in the example in FIG. 6C, the delay D3 extends past t32, which is TIME2 determined by step 113 at time t23. A proper determination of TIME3 in step 117 should account for the entire delay D3, by adding Δt3 to t32, as indicated by a dashed arrow. TIME3 is thereby set at t33.

Returning to FIG. 5C, the procedure 117' comprises an initial step 132 of setting a variable denoted "end time" to TIME2. Step 131 is followed by an iterative calculation, represented by steps 132-137, until the end time is reached, whereupon TIME3 is set to the end time. The iterative calculation generates a delay value for each time step until the end time is reached, while including the respective delay value in the end time. The end time is thereby gradually extended by the calculated delay values (if different from zero). Looking at the details of iterative calculation, the tracker 11 obtains sensor data from the measurement system 34 in step 132. This sensor data is obtained for a current time step. In step 133, the tracker 11 processes the sensor data to determine one or more movement parameters, for example as described above. The processing in step 133 may also operate on sensor data obtained at previous time steps. In step 134, the tracker 11 determines a delay value for the current time step based on the movement parameter(s). In step 135, the tracker 11 updates the end time by addition of the delay value. If the end time is not reached at step 136, the tracker 11 waits for the next time step (step 137) and then proceeds to step 132 for another iteration. The iterations through steps 132-136 continue until the end time is reached, whereupon TIME3 is set to the end time.

It is important to realize that FIGS 6A-6C are merely given as examples. Instead of performing the data transmission DT only after arrival detection, the tracker 11 may perform a data transmission DT directly after each position determination PD, to transmit its current position to the remote computer 40. Thus, in FIG. 6A, the tracker 11 may perform DT at t11, t12, t22 and t32. In FIG. 6B, the tracker 11 may perform DT at t11, t13, t22 and t32. In FIG. 6C, the tracker 11 may perform DT at t11, t13, t23 and t33. This will enable the remote computer 40 to monitor the location of the tracker 11 in near real time. It also enables the tracker 11 to receive the TTA from the remote computer in accordance with FIG. 5E.

It may also be noted that the first process 110' or the second process 110" in FIG. 5A need not return to step 112 after step 115 and step 119, respectively. Instead, the tracker 11 may apply another type of position determination schedule after the evaluation in step 115/119, if arrival is not detected. For example, the tracker 11 may start to perform position determination PD, and optionally data transmission DT, at regular and short time intervals. If the time intervals are short enough, safe detection of arrival may be ensured but at the expense of an increased power consumption.

While the subject of the present disclosure has been described in connection with what is presently considered to be the most practical embodiments, it is to be understood that the subject of the present disclosure is not to be limited to the disclosed embodiments, but on the contrary, is intended to cover various modifications and equivalent arrangements included within the spirit and the scope of the appended claims.

Further, while operations are depicted in the drawings in a particular order, this should not be understood as requiring that such operations be performed in the particular order shown or in sequential order, or that all illustrated operations be performed, to achieve desirable results.

## Claims

1. An electronic device, comprising a positioning system (32) comprising a GNSS receiver (32'), and a wireless communication system (33), the electronic device being configured to, during transportation of the electronic device to a destination (22), operate the positioning system (32) to determine positions of the electronic device and operate the wireless communication system (30) to transmit position data comprising one or more of the positions to a remote computer (40),
wherein the electronic device is further configured to obtain, based on a first position (POS1) determined by the positioning system (32) at a first time point (TIME1), an estimated remaining transportation time (TTA) to the destination (22), and determine, based on the estimated remaining transportation time (TTA), a second time point (TIME2) for operating the positioning system (32) to determine a second position (POS2), the second time point (TIME2) being set to ensure that the electronic device does not arrive at the destination (22) before the second time point (TIME2),
wherein the electronic device further comprises a movement sensing system (34) configured to generate sensor data representing movement of the electronic device, wherein the electronic device is further configured to obtain the sensor data from the movement sensing system (34) after the first time point (TIME1), and process the sensor data to determine one or more movement parameters of the electronic device, **characterized in that**
the electronic device is configured to evaluate the one or more movement parameters for determination of a transportation delay, determine a third time point (TIME3) as a combination of the transportation delay and the second time point (TIME2), and operate the positioning system (32) to determine the second position (POS2) at the third time point (TIME3).

2. The electronic device of claim 1, wherein the one or more movement parameters comprise at least one of a speed of the electronic device, a distance travelled by the electronic device, a movement direction of the electronic device, or a time period of standstill of the electronic device.

3. The electronic device of claim 2, which is configured to include the time period of standstill in the transportation delay.

4. The electronic device of claim 2 or 3, which is configured to determine at least one of: a direction deviation between the movement direction and a reference direction, or a speed deviation between the speed and a reference speed; calculate at least one of: a direction-related delay value based on the direction deviation, or a speed-related delay value based on the speed deviation; and include at least one of the direction-related delay value or the speed-related delay value in the transportation delay.

5. The electronic device of any preceding claim, which is configured to set an end time to the second time point (TIME2), perform an iterative calculation for consecutive time steps until the end time, and set the third time point (TIME3) to the end time after the iterative calculation, wherein the electronic device, during the iterative calculation, is configured to: obtain the sensor data, process the sensor data to determine the one or more movement parameters, calculate a delay value based on the one or more movement parameters, and update the end time by addition of the delay value.

6. The electronic device of any preceding claim, which is configured to determine the second time point (TIME2) by subtracting a margin value from a combination of the first time point (TIME1) and the estimated remaining transportation time (TTA).

7. The electronic device of claim 6, which is configured to determine the second time point (TIME2) by subtracting a margin value from the combination of the first time point (TIME1) and the estimated remaining transportation time (TTA).

8. The electronic device of claim 7, which is configured to determine the margin value based on the estimated remaining transportation time (TTA).

9. The electronic device of any preceding claim, which is configured to calculate a remaining distance between the first position (POS1) and the destination (22), and calculate the estimated remaining transportation time (TTA) based on the remaining distance.

10. The electronic device of claim 9, which is configured to calculate the remaining distance by evaluating the first position (POS1) in relation to map data stored in the electronic device.

11. The electronic device of any one of claims 1-8, which is configured to operate the wireless communication system (33) to transmit the first position (POS1) to the remote computer (40), and receive the estimated remaining transportation time (TTA) from the remote computer (40) in response to transmission of the first position (POS1).

12. The electronic device of any preceding claim, which is further configured to detect arrival at the destination (22) by evaluating the second position (POS2) in relation to one or more geofences (23) stored in the electronic device.

13. The electronic device of claim 12, which is further configured to, upon detection of the arrival, operate the wireless communication system (33) to transmit at least the second position (POS2) the remote computer (40).

14. A method performed in an electronic device (11) comprising a positioning system (32) comprising a GNSS receiver (32'), a wireless communication system (33), and a movement sensing system (34) configured to generate sensor data representing movement of the electronic device (11), said method comprising, during transportation of the electronic device to a destination, operating (110) the positioning system to determine positions of the electronic device, and operating (120) the wireless communication system to transmit position data comprising one or more of the positions to a remote computer, wherein said method further comprises:
obtaining (112), based on a first position (POS1) determined by the positioning system at a first time point (TIME1), an estimated remaining transportation time (TTA) to the destination (22);
determining (113), based on the estimated remaining transportation time (TTA), a second time point (TIME2) for operating the positioning system (32) to determine a second position (POS2), the second time point (TIME2) being set to ensure that the electronic device (11) does not arrive at the destination (22) before the second time point (TIME2);
obtaining (116) the sensor data from the movement sensing system after the first time point (TIME1); and
processing (121) the sensor data to determine one or more movement parameters of the electronic device, said method being **characterized by**
evaluating (122) the one or more movement parameters for determination of a transportation delay;
determining (124) a third time point (TIME3) as a combination of the transportation delay and the second time point (TIME2); and
operating (118) the positioning system to determine the second position (POS2) at the third time point (TIME3).

15. A computer-readable medium comprising instructions which, when installed on a processing system (30), causes the processing system (30) to perform the method of claim 14.

## Patentansprüche

1. Elektronische Vorrichtung, umfassend ein Positionierungssystem (32), das einen GNSS-Empfänger (32') umfasst, und ein drahtloses Kommunikationssystem (33), wobei die elektronische Vorrichtung so konfiguriert ist, dass sie während des Transports der elektronischen Vorrichtung zu einem Zielort (22) das Positionierungssystem (32) betreibt, um Positionen der elektronischen Vorrichtung zu bestimmen, und das drahtlose Kommunikationssystem (30) betreibt, um Positionsdaten, die eine oder mehrere der Positionen umfassen, an einen entfernten Computer (40) zu übertragen,
wobei die elektronische Vorrichtung ferner so konfiguriert ist, dass sie auf der Grundlage einer ersten Position (POS1), die durch das Positionierungssystem (32) zu einem ersten Zeitpunkt (TIME1) bestimmt wird, eine geschätzte verbleibende Transportzeit (TTA) zu dem Zielort (22) erhält und auf der Grundlage der geschätzten verbleibenden Transportzeit (TTA) einen zweiten Zeitpunkt (TIME2) zum Betreiben des Positionierungssystems (32) bestimmt, um eine zweite Position (POS2) zu bestimmen, wobei der zweite Zeitpunkt (TIME2) so festgelegt wird, dass sichergestellt wird, dass die elektronische Vorrichtung nicht vor dem zweiten Zeitpunkt (TIME2) am Zielort (22) ankommt,
wobei die elektronische Vorrichtung ferner ein Bewegungserfassungssystem (34) umfasst, das konfiguriert ist, um Sensordaten zu erzeugen, die eine Bewegung der elektronischen Vorrichtung darstellen, wobei die elektronische Vorrichtung ferner konfiguriert ist, um die Sensordaten von dem Bewegungserfassungssystem (34) nach dem ersten Zeitpunkt (TIME1) zu erhalten und die Sensordaten zu verarbeiten, um einen oder mehrere Bewegungsparameter der elektronischen Vorrichtung zu bestimmen,
**dadurch gekennzeichnet, dass**
die elektronische Vorrichtung so konfiguriert ist, dass sie den einen oder die mehreren Bewegungsparameter zur Bestimmung einer Transportverzögerung auswertet, einen dritten Zeitpunkt (TIME3) als eine Kombination aus der Transportverzögerung und dem zweiten Zeitpunkt (TIME2) bestimmt und das Positionierungssystem (32) betreibt, um die zweite Position (POS2) zu dem dritten Zeitpunkt (TIME3) zu bestimmen.

2. Elektronische Vorrichtung nach Anspruch 1, wobei der eine oder die mehreren Bewegungsparameter mindestens eines umfassen von einer Geschwindigkeit der elektronischen Vorrichtung, einer von dem elektronischen Gerät zurückgelegte Strecke, einer Bewegungsrichtung der elektronischen Vorrichtung oder einer Zeitdauer des Stillstands der elektronischen Vorrichtung.

3. Elektronische Vorrichtung nach Anspruch 2, die so konfiguriert ist, dass sie die Zeitdauer des Stillstands in die Transportverzögerung einbezieht.

4. Elektronische Vorrichtung nach Anspruch 2 oder 3, die so konfiguriert ist, dass sie mindestens eines der Folgenden bestimmt: eine Richtungsabweichung zwischen der Bewegungsrichtung und einer Referenzrichtung oder eine Geschwindigkeitsabweichung zwischen der Geschwindigkeit und einer Referenzgeschwindigkeit; mindestens eines der Folgenden berechnet: einen richtungsbezogenen Verzögerungswert auf der Grundlage der Richtungsabweichung oder einen geschwindigkeitsbezogenen Verzögerungswert auf der Grundlage der Geschwindigkeitsabweichung; und mindestens einen der Werte für die richtungsbezogene Verspätung oder die geschwindigkeitsbezogene Verspätung in die Transportverspätung einbezieht.

5. Elektronische Vorrichtung nach einem der vorstehenden Ansprüche, die so konfiguriert ist, dass sie einen Endzeitpunkt auf den zweiten Zeitpunkt (TIME2) setzt, eine iterative Berechnung für aufeinanderfolgende Zeitschritte bis zum Endzeitpunkt durchführt und den dritten Zeitpunkt (TIME3) auf den Endzeitpunkt nach der iterativen Berechnung setzt, wobei die elektronische Vorrichtung während der iterativen Berechnung so konfiguriert ist, dass sie: die Sensordaten erhält, die Sensordaten verarbeitet, um den einen oder die mehreren Bewegungsparameter zu bestimmen, einen Verzögerungswert auf der Grundlage des einen oder der mehreren Bewegungsparameter berechnet und den Endzeitpunkt durch Addition des Verzögerungswertes aktualisiert.

6. Elektronische Vorrichtung nach einem der vorstehenden Ansprüche, die so konfiguriert ist, dass sie den zweiten Zeitpunkt (TIME2) durch Subtraktion eines Randwertes von einer Kombination aus dem ersten Zeitpunkt (TIME1) und der geschätzten verbleibenden Transportzeit (TTA) bestimmt.

7. Elektronische Vorrichtung nach Anspruch 6, die so konfiguriert ist, dass sie den zweiten Zeitpunkt (TIME2) durch Subtraktion eines Randwertes von der Kombination aus dem ersten Zeitpunkt (TIME1) und der geschätzten verbleibenden Transportzeit (TTA) bestimmt.

8. Elektronische Vorrichtung nach Anspruch 7, die so konfiguriert ist, dass sie den Randwert auf der Grundlage der geschätzten verbleibenden Transportzeit (TTA) bestimmt.

9. Elektronische Vorrichtung nach einem der vorstehenden Ansprüche, die so konfiguriert ist, dass sie eine verbleibende Entfernung zwischen der ersten Position (POS1) und dem Zielort (22) berechnet und die geschätzte verbleibende Transportzeit (TTA) auf der Grundlage der verbleibenden Entfernung berechnet.

10. Elektronische Vorrichtung nach Anspruch 9, die so konfiguriert ist, dass sie die verbleibende Entfernung durch Auswerten der ersten Position (POS1) in Bezug auf in der elektronischen Vorrichtung gespeicherte Kartendaten berechnet.

11. Elektronische Vorrichtung nach einem der Ansprüche 1-8, die so konfiguriert ist, dass sie das drahtlose Kommunikationssystem (33) betreibt, um die erste Position (POS1) an den entfernten Computer (40) zu übertragen, und die geschätzte verbleibende Transportzeit (TTA) von dem entfernten Computer (40) als Reaktion auf die Übertragung der ersten Position (POS1) empfängt.

12. Elektronische Vorrichtung nach einem der vorstehenden Ansprüche, die ferner so konfiguriert ist, dass sie die Ankunft am Zielort (22) durch Auswerten der zweiten Position (POS2) in Bezug auf eine oder mehrere in der elektronischen Vorrichtung gespeicherte Geofences (23) erkennt.

13. Elektronische Vorrichtung nach Anspruch 12, die ferner so konfiguriert ist, dass sie bei Erkennung der Ankunft das drahtlose Kommunikationssystem (33) betätigt, um mindestens die zweite Position (POS2) an den entfernten Computer (40) zu übertragen.

14. Verfahren, das in einem elektronischen Gerät (11) durchgeführt wird, das ein Positionierungssystem (32) umfassend einen GNSS-Empfänger (32'), ein drahtloses Kommunikationssystem (33) und ein Bewegungserfassungssystem (34) umfasst, das so konfiguriert ist, dass es Sensordaten erzeugt, die die Bewegung der elektronischen Vorrichtung (11) darstellen, wobei das Verfahren während des Transports der elektronischen Vorrichtung zu einem Bestimmungsort das Betreiben (110) des Positionierungssystems umfasst, um Positionen der elektronischen Vorrichtung zu bestimmen, und das Betreiben (120) des drahtlosen Kommunikationssystems, um Positionsdaten, die eine oder mehrere der Positionen umfassen, an einen entfernten Computer zu übertragen, wobei das Verfahren ferner umfasst:
Erhalten (112) einer geschätzten verbleibenden Transportzeit (TTA) zu dem Zielort (22) auf der Grundlage einer ersten Position (POS1), die von dem Positionierungssystem zu einem ersten Zeitpunkt (TIME1) bestimmt wurde;
Bestimmen (113), basierend auf der geschätzten verbleibenden Transportzeit (TTA), eines zweiten Zeitpunkts (TIME2) zum Betreiben des Positionierungssystems (32), um eine zweite Position (POS2) zu bestimmen, wobei der zweite Zeitpunkt (TIME2) eingestellt wird, um sicherzustellen, dass die elektronische Vorrichtung (11) nicht vor dem zweiten Zeitpunkt (TIME2) am Zielort (22) ankommt,
Erhalten (116) der Sensordaten von dem Bewegungserfassungssystem nach dem ersten Zeitpunkt (TIME1), und
Verarbeiten (121) der Sensordaten, um einen oder mehrere Bewegungsparameter der elektronischen Vorrichtung zu bestimmen, wobei das Verfahren **gekennzeichnet ist durch**
Auswerten (122) der einen oder mehreren Bewegungsparameter zur Bestimmung einer Transportverzögerung;
Bestimmen (124) eines dritten Zeitpunkts (TIME3) als eine Kombination der Transportverzögerung und des zweiten Zeitpunkts (TIME2), und
Betreiben (118) des Positionierungssystems, um die zweite Position (POS2) zu dem dritten Zeitpunkt (TIME3) zu bestimmen.

15. Computerlesbares Medium, umfassend Anweisungen, die, wenn sie auf einem Verarbeitungssystem (30) installiert sind, das Verarbeitungssystem (30) veranlassen, das Verfahren nach Anspruch 14 durchzuführen.

## Revendications

1. Dispositif électronique, comprenant un système de positionnement (32) comprenant un récepteur GNSS (32'), et un système de communication sans fil (33), le dispositif électronique étant configuré pour, pendant un transport du dispositif électronique vers une destination (22), faire fonctionner le système de positionnement (32) pour déterminer des positions du dispositif électronique et faire fonctionner le système de communication sans fil (30) pour transmettre des données de position comprenant une ou plusieurs des positions à un ordinateur distant (40),
dans lequel le dispositif électronique est configuré en outre pour obtenir, en fonction d'une première position (POS1) déterminée par le système de positionnement (32) à un premier point de temps (TIME1), un temps de transport restant estimé (TTA) jusqu'à la destination (22), et déterminer, en fonction du temps de transport restant estimé (TTA), un deuxième point de temps (TIME2) pour faire fonctionner le système de positionnement (32) pour déterminer une seconde position (POS2), le deuxième point de temps (TIME2) étant défini pour garantir que le dispositif électronique n'arrive pas à la destination (22) avant le deuxième point de temps (TIME2),
dans lequel le dispositif électronique comprend en outre un système de captage de déplacement (34) configuré pour générer des données de capteur représentant un déplacement du dispositif électronique, dans lequel le dispositif électronique est configuré en outre pour obtenir les données de capteur auprès du système de captage de déplacement (34) après le premier point de temps (TIME1), et traiter les données de capteur pour déterminer un ou plusieurs paramètres de déplacement du dispositif électronique, **caractérisé en ce que**
le dispositif électronique est configuré pour évaluer le ou les paramètres de déplacement pour la détermination d'un retard de transport, déterminer un troisième point de temps (TIME3) en tant que combinaison du retard de transport et du deuxième point de temps (TIME2), et faire fonctionner le système de positionnement (32) pour déterminer la seconde position (POS2) au troisième point de temps (TIME3).

2. Dispositif électronique selon la revendication 1, dans lequel le ou les paramètres de déplacement comprennent au moins l'un parmi une vitesse du dispositif électronique, une distance parcourue par le dispositif électronique, une direction de déplacement du dispositif électronique, ou un laps de temps d'immobilisation du dispositif électronique.

3. Dispositif électronique selon la revendication 2, qui est configuré pour inclure le laps de temps d'immobilisation dans le retard de transport.

4. Dispositif électronique selon la revendication 2 ou 3, qui est configuré pour déterminer au moins l'un parmi : un écart de direction entre la direction de déplacement et une direction de référence, ou un écart de vitesse entre la vitesse et une vitesse de référence ; calculer au moins l'une parmi : une valeur de retard se rapportant à la direction en fonction de l'écart de direction, ou une valeur de retard se rapportant à la vitesse en fonction de l'écart de vitesse ; et comporter au moins l'une parmi la valeur de retard se rapportant à la direction ou la valeur de retard se rapportant à la vitesse dans le retard de transport.

5. Dispositif électronique selon l'une quelconque revendication précédente, qui est configuré pour régler un temps de fin sur le deuxième point de temps (TIME2), mettre en oeuvre un calcul itératif pour des étapes de temps consécutives jusqu'au temps de fin, et régler le troisième point de temps (TIME3) sur le temps de fin après le calcul itératif, dans lequel le dispositif électronique, pendant le calcul itératif, est configuré pour : obtenir les données de capteur, traiter les données de capteur pour déterminer le ou les paramètres de déplacement, calculer une valeur de retard en fonction du ou des paramètres de déplacement, et mettre à jour le temps de fin par addition de la valeur de retard.

6. Dispositif électronique selon l'une quelconque revendication précédente, qui est configuré pour déterminer le deuxième point de temps (TIME2) en soustrayant une valeur de marge d'une combinaison du premier point de temps (TIME1) et du temps de transport restant estimé (TTA).

7. Dispositif électronique selon la revendication 6, qui est configuré pour déterminer le deuxième point de temps (TIME2) en soustrayant une valeur de marge de la combinaison du premier point de temps (TIME1) et du temps de transport restant estimé (TTA).

8. Dispositif électronique selon la revendication 7, qui est configuré pour déterminer la valeur de marge en fonction du temps de transport restant estimé (TTA).

9. Dispositif électronique selon l'une quelconque revendication précédente, qui est configuré pour calculer une distance restante entre la première position (POS1) et la destination (22), et calculer le temps de transport restant estimé (TTA) en fonction de la distance restante.

10. Dispositif électronique selon la revendication 9, qui est configuré pour calculer la distance restante en évaluant la première position (POS1) par rapport à des données cartographiques stockées dans le dispositif électronique.

11. Dispositif électronique selon l'une quelconque des revendications 1 à 8, qui est configuré pour faire fonctionner le système de communication sans fil (33) pour transmettre la première position (POS1) à l'ordinateur distant (40), et recevoir le temps de transport restant estimé (TTA) en provenance de l'ordinateur distant (40) en réponse à la transmission de la première position (POS1).

12. Dispositif électronique selon l'une quelconque revendication précédente, qui est configuré en outre pour détecter une arrivée à la destination (22) en évaluant la seconde position (POS2) par rapport à un ou plusieurs géorepérages (23) stockés dans le dispositif électronique.

13. Dispositif électronique selon la revendication 12, qui est configuré en outre pour, à la détection de l'arrivée, faire fonctionner le système de communication sans fil (33) pour transmettre au moins la seconde position (POS2) à l'ordinateur distant (40).

14. Procédé mis en oeuvre dans un dispositif électronique (11) comprenant un système de positionnement (32) comprenant un récepteur GNSS (32'), un système de communication sans fil (33) et un système de captage de déplacement (34) configuré pour générer des données de capteur représentant un déplacement du dispositif électronique (11), ledit procédé comprenant, pendant le transport du dispositif électronique jusqu'à une destination, le fonctionnement (110) du système de positionnement pour déterminer des positions du dispositif électronique, et le fonctionnement (120) du système de communication sans fil pour transmettre des données de position comprenant une ou plusieurs des positions à un ordinateur distant, dans lequel ledit procédé comprend en outre :
l'obtention (112), en fonction d'une première position (POS1) déterminée par le système de positionnement à un premier point de temps (TIME1), d'un temps de transport restant estimé (TTA) jusqu'à la destination (22) ;
la détermination (113), en fonction du temps de transport restant estimé (TTA), d'un deuxième point de temps (TIME2) pour faire fonctionner le système de positionnement (32) pour déterminer une seconde position (POS2), le deuxième point de temps (TIME2) étant réglé pour garantir que le dispositif électronique (11) n'arrive pas à la destination (22) avant le deuxième point de temps (TIME2) ;
l'obtention (116) des données de capteur en provenance du système de captage de déplacement après le premier point de temps (TIME1) ; et
le traitement (121) des données de capteur pour déterminer un ou plusieurs paramètres de déplacement du dispositif électronique, ledit procédé étant **caractérisé par**
l'évaluation (122) du ou des paramètres de déplacement pour la détermination d'un retard de transport ;
la détermination (124) d'un troisième point de temps (TIME3) en tant que combinaison du retard de transport et du deuxième point de temps (TIME2) ; et
le fonctionnement (118) du système de positionnement pour déterminer la seconde position (POS2) au troisième point de temps (TIME3).

15. Support lisible par ordinateur comprenant des instructions qui, lorsqu'il est installé sur un système de traitement (30), amène le système de traitement (30) à mettre en oeuvre le procédé selon la revendication 14.
